# EUROPEAN PATENT APPLICATION

(11) **EP 4 742 101 A1**
(43) Date of publication of application: **13.05.2026**
(21) Application number: 25214124.7
(22) Date of filing: 06.11.2025
(51) Int. Cl.: G06N 3/045, G06N 5/043

(54) **RAPIDLY DEPLOYABLE AGENTIC REASONING PLATFORM**

(30) Priority: 08.11.2024 US 202463718094 P; 24.10.2025 US 202519368713
(71) Applicant: Fisher Scientific Company, L.L.C., Pittsburgh, Pennsylvania 15275 (US)
(72) Inventor: Ninteman III, Lambert Joseph, Pittsburg, 15275 (US); Bonevich, Jeffrey Donald, Pittsburg, 15275 (US)
(74) Representative: Korenberg, Alexander Tal

(57) **Abstract**

Systems, methods, or techniques are provided for reasoning and response generation across a synthetic data mesh. In various embodiments, a system can comprise a memory that stores computer executable components; and a processor that executes the computer executable components stored in the memory, wherein the computer executable components comprise: a plurality of reasoning components, wherein a first reasoning component of the plurality of reasoning components is operatively coupled to other reasoning components of the plurality of reasoning components, and the first reasoning component is configured to select one or more of the other reasoning components to assist in responding to a prompt.

## Description

### Cross-Reference to Related Application

This application claims priority to and the benefit of U.S. Provisional Application No. 63/718,094, entitled "RAPIDLY DEPLOYABLE AGENTIC REASONING PLATFORM," which was filed on November 8, 2024. The aforementioned application is hereby incorporated herein by reference in its entirety.

### Background

Many industries and enterprises are rapidly introducing artificial intelligence (Al) into their workflows and processes. However, integrating various data sources as well as providing enterprise-wide access to AI processes can lead to significant scaling issues.

### Summary

The following presents a summary to provide a basic understanding of one or more embodiments. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, devices, systems, methods, or apparatus that facilitate reasoning and response generation across a synthetic data mesh are provided.

According to one or more embodiments, a system is provided. The system can comprise a memory that stores computer executable components; and a processor that executes the computer executable components stored in the memory, wherein the computer executable components comprise: a plurality of reasoning components, wherein a first reasoning component of the plurality of reasoning components is operatively coupled to other reasoning components of the plurality of reasoning components, and the first reasoning component is configured to select one or more of the other reasoning components to assist in responding to a prompt.

An advantage of the system, and/or of a corresponding method, can be rapid and easy scaling of the system through the use and addition of new reasoning components to the plurality of reasoning components.

### Brief Description of the Drawings

Embodiments will be readily understood by the following detailed description in conjunction with the accompanying drawings. To facilitate this description, like reference numerals designate like structural elements. Embodiments are illustrated by way of example, not by way of limitation, in the figures of the accompanying drawings.
FIG. 1 is a block diagram of an example scientific instrument module for performing reasoning and response generation across a synthetic data mesh, in accordance with one or more embodiments described herein.
FIG. 2 is a flow diagram of an example method of performing reasoning and response generation across a synthetic data mesh, in accordance with one or more embodiments described herein.
FIG. 3 illustrates a block diagram of an example system that can facilitate reasoning and response generation across a synthetic data mesh, in accordance with one or more embodiments described herein.
FIG. 4 illustrates a block diagram of an example reasoning component, in accordance with one or more embodiments described herein.
FIG. 5 illustrates a block diagram of an example reasoning engine, in accordance with one or more embodiments described herein.
FIG. 6 illustrates a block diagram of an example knowledge engine, in accordance with one or more embodiments described herein.
FIG. 7 illustrates a block diagram of example analytical modules, in accordance with one or more embodiments described herein.
FIG. 8 illustrates a flow diagram of an example method that can facilitate reasoning and response generation across a plurality of reasoning components, in accordance with one or more embodiments described herein.
FIG. 9 illustrates a flow diagram of an example method that can facilitate response generation across a plurality of reasoning components, in accordance with one or more embodiments described herein.
FIG. 10 illustrates a flow diagram of an example method that can facilitate information transfer across a plurality of reasoning components, in accordance with one or more embodiments described herein.
FIG. 11 illustrates a block diagram of an example operating environment in which one or more embodiments described herein can be facilitated.

### Detailed Description

The following detailed description is merely illustrative and is not intended to limit embodiments and/or application or utilization of embodiments. One or more embodiments are now described with reference to the drawings. In the following description, for purposes of explanation, numerous specific details are set forth in order to provide a more thorough understanding of the one or more embodiments. It is evident, however, in various cases, that the one or more embodiments can be practiced without these specific details.

In various fields and enterprises, AI is increasingly being applied across large networks and to large existing data sources. Often, these AI applications are hosted centrally with users accessing the AI application remotely. However, this creates scalability issues as increases in numbers of users require increases in the computing power of the central servers running the AI applications. Additionally, there are issues in integrating existing data sources into AI applications, as data sources or AI processes must be adapted accordingly. Furthermore, across large enterprises or networks, issues such as data access and security compliance become obstacles to efficient Al processing.

To overcome the one or more deficiencies of existing technologies as identified above, one or more embodiments described herein can comprise a plurality of reasoning components, wherein a first reasoning component of the plurality of reasoning components is operatively coupled to other reasoning components of the plurality of reasoning components, and the first reasoning component is configured to select one or more of the other reasoning components to assist in responding to a prompt. For example, when the first reasoning component receives a prompt, it can divide the prompt into various sub-tasks and then select the reasoning components to invoke based on the data sources relevant to the sub-tasks.

Furthermore, one or more embodiments described herein can generate, using the first reasoning component, a response to the prompt based on data provided by the selected one or more artificial intelligence agents and the selected one or more reasoning components.

Accordingly, reasoning components distributed across the various computing systems create a synthetic data mesh that connects, integrates, and scales across the reasoning components. For example, as each locally hosted reasoning component operates as both a data source, through managing one or more databases, and a data generator, through its ability to generate responses to user prompts. The reasoning components can be distributed across various different computing nodes in a network and can scale through the addition of new reasoning components. This enables rapid scalability without hardware changes to central servers. Furthermore, through the interconnectivity of the reasoning components, data can be quickly collected from multiple reasoning components to a single reasoning component, which can then locally generate a response to a prompt using the collected data. In one or more embodiments, these reasoning components can be alternatively referred to as a Universal Packaged Reasoning Engine (UPRE).

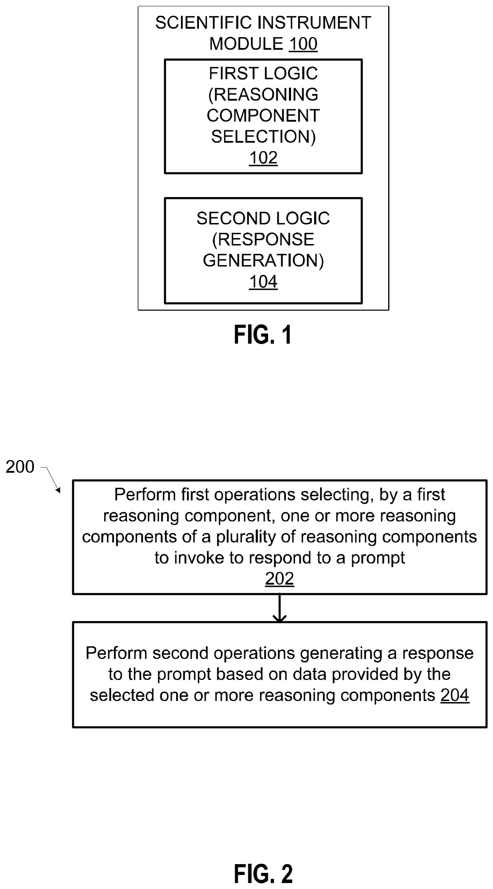

FIG. 1 illustrates an example, non-limiting block diagram of a scientific instrument module 100 in accordance with various embodiments described herein.

In various embodiments, the scientific instrument module 100 can be implemented by circuitry (e.g., including electrical or optical components), such as a programmed computing device. Logic of the scientific instrument module 100 can be included in a single computing device or can be distributed across multiple computing devices that are in communication with each other as appropriate. Examples of computing devices that may, singly or in combination, implement the scientific instrument module 100 are discussed herein with reference to FIG. 12.

The scientific instrument module 100 may include first logic 102 and second logic 104. As used herein, the term "logic" may include an apparatus that is to perform a set of operations associated with the logic elements. For example, any of the logic elements included in the scientific instrument module 100 may be implemented by one or more computing devices programmed with instructions to cause one or more processing devices of the computing devices to perform the associated set of operations. In a particular embodiment, a logic element may include one or more non-transitory computer-readable media having instructions thereon that, when executed by one or more processing devices of one or more computing devices, cause the one or more computing devices to perform the associated set of operations. As used herein, the term "module" may refer to a collection of one or more logic elements that, together, perform a function associated with the module. Different ones of the logic elements in a module may take the same form or may take different forms. For example, some logic in a module may be implemented by a programmed general-purpose processing device, while other logic in a module may be implemented by an application-specific integrated circuit (ASIC). In another example, different ones of the logic elements in a module may be associated with different sets of instructions executed by one or more processing devices. A module may not include all of the logic elements depicted in the associated drawing; for example, a module may include a subset of the logic elements depicted in the associated drawing when that module is to perform a subset of the operations discussed herein with reference to that module.

In various embodiments, there can be a scientific instrument corresponding to the scientific instrument module 100. In various aspects, the scientific instrument can be any suitable computerized device that can electronically measure some scientifically-relevant, clinically-relevant, or research-relevant characteristic, property, or attribute of an analytical sample (e.g., of a known or unknown mixture, compound, or collection of matter). As a non-limiting example, a scientific instrument can be an electron microscope, such as a transmission electron microscope, a scanning electron microscope, a dual-beam microscope, or another suitable piece of imaging or analytical equipment.

The first logic 102 may select one or more reasoning components of a plurality of reasoning components to invoke to respond to a prompt. For example, a first reasoning component of the plurality of reasoning components can receive a prompt from an entity, such as a user. The first reasoning component can divide the prompt into various sub-tasks and select one or more additional reasoning components of the plurality of reasoning components to invoke based on abilities of, or data sources managed by, the other reasoning components of the plurality of reasoning components.

The second logic 104 may generate a response to the prompt based on data provided by the selected one or more reasoning components. For example, the first reasoning component can receive data from the one or more selected reasoning components. Using the received data, the reasoning component can then generate a response to the prompt.

FIG. 2 is a flow diagram of a computer-implemented method 200 in accordance with one or more embodiments described herein. The operations of the computer-implemented method 200 may be used in any suitable setting to perform any suitable operations (e.g., can be performed by or used in conjunction with any of the various modules, computing devices, or graphical user interfaces described with respect to FIGS. 1, 3, 6, and 14). Operations are illustrated once each and in a particular order in FIG. 2, but the operations may be reordered or repeated as desired and appropriate (e.g., different operations performed may be performed in parallel, as suitable).

At 202, first operations may be performed. For example, the first logic 102 of scientific instrument module 100 may perform the operations of 202. The first operations may include selecting one or more reasoning components of a plurality of reasoning components to invoke to respond to a prompt.

At 204, second operations may be performed. For example, the first logic 102 of scientific instrument module 100 may perform the operations of 204. The second operations may include generating a response to the prompt based on data provided by the selected one or more reasoning components.

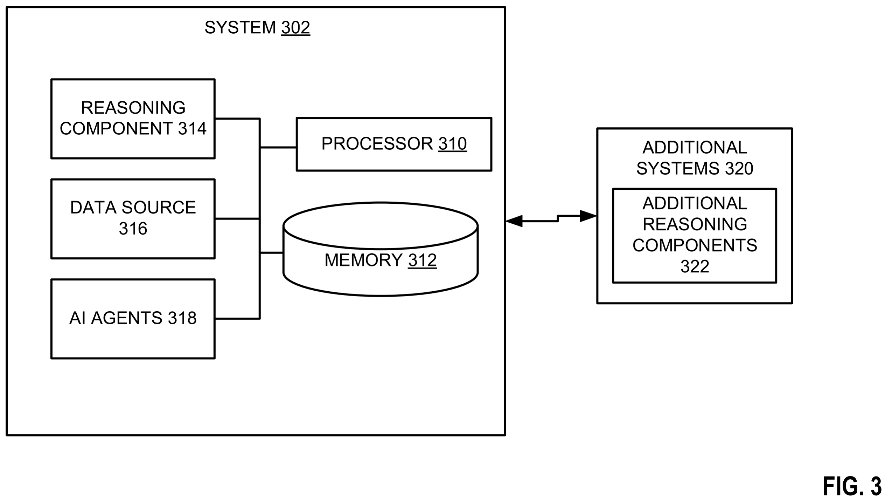

FIG. 3 illustrates a block diagram of an example, non-limiting system that can facilitate operation of a synthetic data mesh and advanced reasoning in accordance with one or more embodiments described herein.

In various aspects, the system 302 can comprise a processor 310 (e.g., computer processing unit, microprocessor) and a non-transitory computer-readable memory 312 that is operably or operatively or communicatively connected or coupled to the processor 310. The non-transitory computer-readable memory 312 can store computer-executable instructions which, upon execution by the processor 310, can cause the processor 310 or other components of the system 308 (e.g., reasoning component 314, data source 316, and/or AI agents 318) to perform one or more acts. In various embodiments, the non-transitory computer-readable memory 312 can store computer-executable components (e.g., reasoning component 314, data source 316, and/or AI agents 318), and the processor 310 can execute the computer-executable components. In various embodiments, system 308 can further be connected to one or more additional external computing systems 320 comprising one or more additional reasoning components 322.

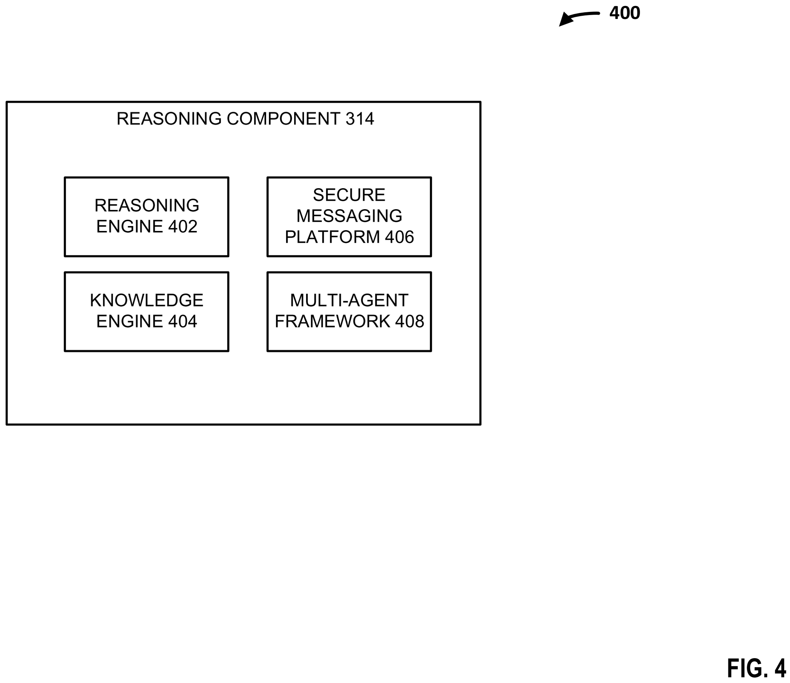

In various embodiments, reasoning component 314 and additional reasoning components 322 can be operatively coupled to form a plurality of reasoning components, wherein each reasoning component can manage one or more data sources, such as data source 316. Reasoning component 314, and similarly additional reasoning components 322, can comprise one or more sub-components that enable reasoning component 314 and/or additional reasoning components 322 to generate responses to one or more user provided prompts. In one or more embodiments, reasoning component 314 can comprise sub-components reasoning engine 402, knowledge engine 404, secure messaging platform 406, and multi-agent framework 408, as illustrated in FIG. 4. It should be appreciated that one or more of these sub-components can further comprise their own sub-components as described below.

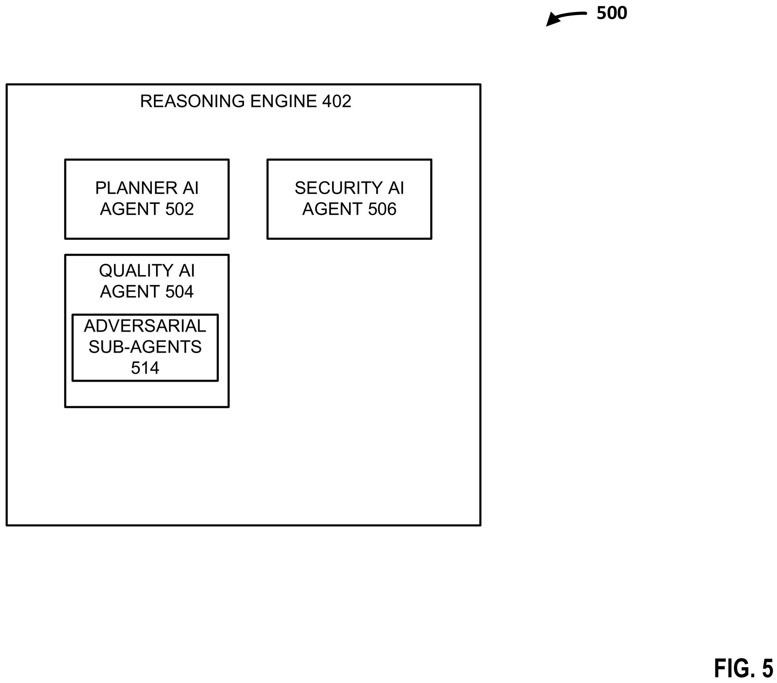

In various embodiments, the reasoning engine 402 can comprise a planner Al agent 502, a quality AI agent 504, and a security AI agent 506, as illustrated in FIG. 5. The planner AI agent 502 can receive initial prompts for entities, such as users, or other agents, and decomposes the prompt into sub-tasks. For example, the planner AI agent 502 can receive the prompt from a user. The planner AI agent 502 can then utilize natural language processing to parse the prompt and divide it into sub-tasks. In various embodiments, these sub-tasks may require information from or the use of additional reasoning components 322 or AI agents 318, either hosted on system 302 or another connected system of additional systems 320. For example, one of the sub-tasks may call for use of information related to a specific topic. Using user-provided data sources, the planner AI agent 502 can look up which additional reasoning components manage one or more data sources related to the specific topic. In one or more additional examples, the planner AI agent 502 can determine what types of AI agents are required to execute one or more of the sub-tasks. Using the user-provided data sources, the planner AI agent 502 can determine what AI agents, and where said agents are located, that can execute the one or more sub-tasks. Once the planner AI agent 502 has created the sub-tasks and determined which external reasoning components and local or external AI agents to invoke to respond to the prompt, the planner AI agent 502 can orchestrate and coordinate an overall workflow of the invoked reasoning components or AI agents. For example, the planner AI agent 502 can utilize one or more task scheduling algorithms to ensure efficient allocation of tasks to appropriate agents, create or terminate instances of agents as needed, implement voting mechanisms between agents as needed, ensure agents follow a set of system guidelines, and manage inter-agent communication through a MAS framework. Furthermore, planner AI agent 502 can monitor and optimize the performance of various sub-components of reasoning component 314 during response generation.

In various embodiments, the security AI agent 506 can perform a security analysis on prompts and requests of the reasoning components and/or AI agents. For example, the security AI agent 506 can manage security for communications and data requests between various reasoning components and AI agents. In doing so, the security agent can make access determinations based on role-based control clearances and/or attribute-based access control clearances. In various embodiments these control clearances can be associated with the login of the user who provided the prompt and/or with system 302. For example, specific users may have different clearances, or different systems may have different clearances based on the capabilities or location of the system. The security AI agent 506 can also veto any process that violates security process and conduct security analysis on responses and outputs. For example, security AI agent 506 can determine if prompts, sub-tasks, responses, and/or other actions comply with one or more security policies. In one or more embodiments, security AI agent 506 can further monitor all steps or actions within response generation and veto the execution of any step or action that violates one or more security policies.

In various embodiments, the quality AI agent 504 is responsible for output quality and compliance. For example, the quality AI agent 504 can analyze knowledge graphs 602 within the knowledge engine 404 and other memory management structures. The quality AI agent 504 can also collect outputs and insights from various analytical agents/modules 608 of the knowledge engine 404, such as spectral agents, Koopman modules and GNN modules. In various embodiments, the quality AI agent 504 can comprise one or more adversarial sub-agents 514. In various embodiments, these sub-agents 514 can comprise an empiricist sub-agent that focuses on observational data and experimental results, a rationalist sub-agent that focuses on logical deduction and theoretical frameworks, and a skeptic sub-agent that challenges assumptions. These sub-agents 514 can reason together and against each other with voting mechanisms to resolve disagreements.

In various embodiments, knowledge engine 404 can manage one or more knowledge graphs, perform advanced analytical computations, and provide insights that enable the reasoning engine to effectively respond to prompts. The knowledge engine 404 can utilize a publish/subscribed communication pattern to facilitate efficient communication between various sub-agents and various sub-agents of the reasoning engine.

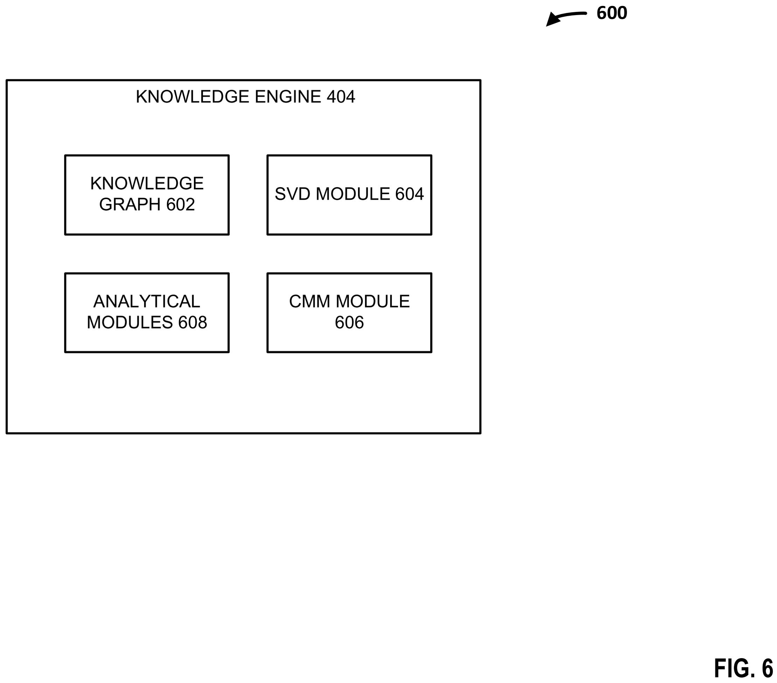

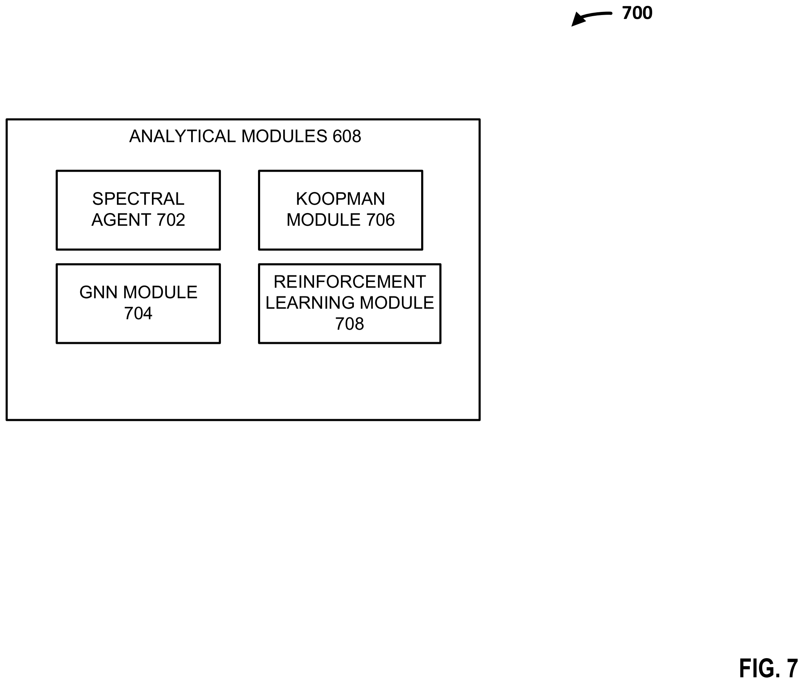

In various embodiments, the knowledge engine 404 can comprise one or more knowledge graphs 602, a singular value decomposition module 604, a CMM module 606, and one or more analytical modules 608, as illustrated in FIG. 6. In various embodiments, the knowledge engine 404 can receive data requested from the various external reasoning components of the AI agents invoked by the reasoning component 314 in response to the prompt. This data can then be organized into one or more knowledge graphs 602 for use in responding to the prompt. The knowledge graph 602 can represent relationships derived from various data sources and provides the foundation for the analytical modules 608. Updates to the knowledge graph 602 can automatically trigger updates in the CMM module 606 and the analytical modules 608. The singular value decomposition (SVD) module 604 can provide dimensionality reduction services for the knowledge graph 602, which can improve the efficiency of the analytical modules 608 when handling the knowledge graph. The singular value decomposition module 604 can employ approximation methods such as randomization SVD, incremental SVD, or truncated SVD. The CMM module 606 manages storage, access, and updates of adjacency and Laplacian matrices derived from the knowledge graph 602. Accordingly, the CMM module 606 can employ memory-mapped files or in-memory databases, proved API's for data access, implement versioning and synchronization, handle concurrent read/write operations from various sources, and ensure data integrity. The analytical modules 608 can perform specialized computations to extract insights from the knowledge graph that can then be utilized by one analytical modules 608 or by the reasoning engine 402. The analytical modules 608 can comprise a spectral agent 702, a GNN module 704, a Koopman module 706, a reinforcement learning module 708, and/or other agents/modules that leverage Laplacian and adjacency matrices as shown in FIG. 7. The spectral agent 702 can utilize spectral graph theory techniques to identify structural properties of the knowledge graph 602, such as patterns, frequencies, clusters, topology and anomalies. The GNN module 704 can learn on the knowledge graph without using traditional backpropagation. Accordingly, the GNN 704 can enhance data embedding and node representations and support tasks such as node classification, link prediction and clustering. The Koopman module 706 can utilize Koopman operator theory to provide a linear representation of nonlinear dynamics, facilitating prediction, estimation and control related to the knowledge graph 602. The reinforcement learning module 708 can learn policies related to the optimization of knowledge graphs and then utilize these policies to edit the knowledge graph, such as adding or removing edges, to improve efficiency. Additional examples analytical agents are provided in the Appendix of the incorporated provisional application.

In various embodiments, the secure messaging platform 406 can ensure that all communication adhere to security polices, provide end-to-end encryption, and authenticate agents. The MAS framework 408 can provide protocols for communication between the reasoning components or sub-components of reasoning components ensuring efficient and secure communication.

In one or more embodiments, the reasoning component 314 can select one or more reasoning components of a plurality of reasoning components (e.g., additional reasoning components 322) to invoke to respond to a prompt. Furthermore, reasoning component 314 can select one or more artificial intelligent agents of a plurality of artificial intelligence agents (e.g., AI agents 318 and/or additional AI agents located on additional systems 320) to invoke to respond to the prompt. For example, in one or more embodiments, the planner AI agent 502 of reasoning engine 402 can divide the prompt into one or more sub-tasks. These sub-tasks can comprise retrieval of data relevant to the prompt, processing of such data, or any other task related to the generation of a response to the prompt. In one or more embodiments, planner AI agent 502 can determine which additional reasoning components 322 or AI agents 318 to invoke based on a plurality of user-provided data sources. In various embodiments, various user-provided data sources can comprise information such as communication connections to additional reasoning components 322, access control clearances of reasoning component 314, lists of data sources managed by additional reasoning components 322, or lists of abilities of AI agents 318 that reasoning component 314 can utilize during selection. For example, given a prompt related to a specific topic, planner AI agent 502 can determine which data sources relate to that specific topic and invoke the additional reasoning components 322 responsible for managing those data sources. In one or more embodiments, planner AI agent 502 can calculate a relevance metric of a data source to the prompt based on semantic similarity of a data source description to the prompt or a sub-task. Alternatively, or in addition to, planner AI agent 502 can calculate the relevance metric based on a comparison of the sub-tasks or prompt to metadata tags of the data sources. If the relevance metric is above a threshold, the data source can be considered relevant. In another example, given a sub-task calls for use of a specific ability, planner AI agent 502 can use the plurality of user-provided data sources to identify which AI agents 318 has said ability and invoke the correct AI agent. It should also be appreciated that AI agents located within additional reasoning components 322 can also be invoked.

In various embodiments, security AI agent 506 can approve or reject the prompt prior to handling by planner AI agent 502. For example, security AI agent 506 can process the prompt to ensure that the prompt is not an attempt to access restricted controls of reasoning component 314. Additionally, security AI agent 506 can check the prompt for restricted content and compare such restricted content to control clearances of the user entering the prompt to ensure the user has clearance to ask such a prompt. In a further embodiment, security AI agent 506 can reject or approve sub-tasks, which of AI agents 318 to invoke and/or which of additional reasoning components 322 to invoke. Furthermore, security AI agent 506 can perform real-time security checks on all actions planned, scheduled, or executed by reasoning component 314 to ensure compliance with one or more security protocols.

In various embodiments, reasoning component 314 can invoke one or more other reasoning components of additional reasoning components 322. For example, in response to determining that the a sub-task of the prompt calls for data from a data source managed by a second reasoning component of additional reasoning components 322, the second reasoning component can check at least one of a role-based control clearance or attribute-based access control clearance of reasoning component 314. Accordingly, a security AI agent of the second reasoning component can ensure what clearance both reasoning component 314 and the user interfacing with reasoning component 314 have. Based on such security checks, the second reasoning component can then approve data from one or more data sources managed by the second reasoning component. The second reasoning component can then aggregate and process such approved data based on the prompt and/or the sub-task, check that the processed and aggregated data meets security policies of the security AI agent, and then transmit the processed and aggregated data back to reasoning component 314. It should be appreciated that in aggregating and processing the data, the second reasoning component can execute any action in the same manner as reasoning component 314 does to answer a prompt. In this manner, the reasoning components that are connected together each act as a distributed data node and a processing node, thereby creating a synthetic data mesh across the reasoning components.

In various embodiments, reasoning component 314 can generate the response to the prompt by generating one or more knowledge graphs from data provided by the one or more invoked user-provided artificial intelligence agents or by the one or more invoked other reasoning components; generating one or more outputs based on the prompt and the one or more knowledge graphs; and synthesizing the response based on conclusions of two or more adversarial artificial intelligence agents, wherein the two or more adversarial artificial intelligence agents generate the conclusions based on the one or more outputs. For example, one or more of the sub-tasks determined by planner AI agent 502 can be scheduled to be executed by knowledge engine 404. Knowledge engine 404 can generate one or more knowledge graphs 602 from information gathered from additional reasoning components 322, from AI agents 318, and/or from data source 316 managed by reasoning component 314. In various embodiments, various sub-components of knowledge engine 404, such as SVD module 604 and/or CMM module 606, can process the one or more knowledge graphs 602 to improve efficiency or optimize the one or more knowledge graphs for specific use cases or tasks. The analytical modules 608 can then utilize the one or more knowledge graphs 602 to generate one or more outputs, insights and/or data transformation. Such outputs, insights and/or data transformations can then be sent to quality AI agent 504. In one or more embodiments, such outputs, insights, and/or data transformations can be sent utilizing a subscribe/publish protocol. Adversarial sub-agents 514 can then generate conclusions based on the outputs and insights generated by the analytical modules 608, as well as knowledge graph 602. These adversarial sub-agents can generate conclusions, argue against one another and vote on conclusions between themselves. Use of these different types of agents can prevent hallucinations in prompt response, and due to the voting procedures, selects outputs that multiple sub-agents are likely to agree with, thus increasing accuracy of the responses. Planner AI agent 502 can then collect and synthesize the voted upon conclusions into a response to the prompt. In one or more embodiments, security AI agent 506 can approve or reject the response based on one or more security protocols. If approved, planner AI agent 502 can output the response to the user who input the prompt. It should be appreciated that in one or more embodiments, planner AI agent 502 can continuously monitor the above-described process and implement optimizations when appropriate to improve speed at which responses are generated, as well as the quality of the responses.

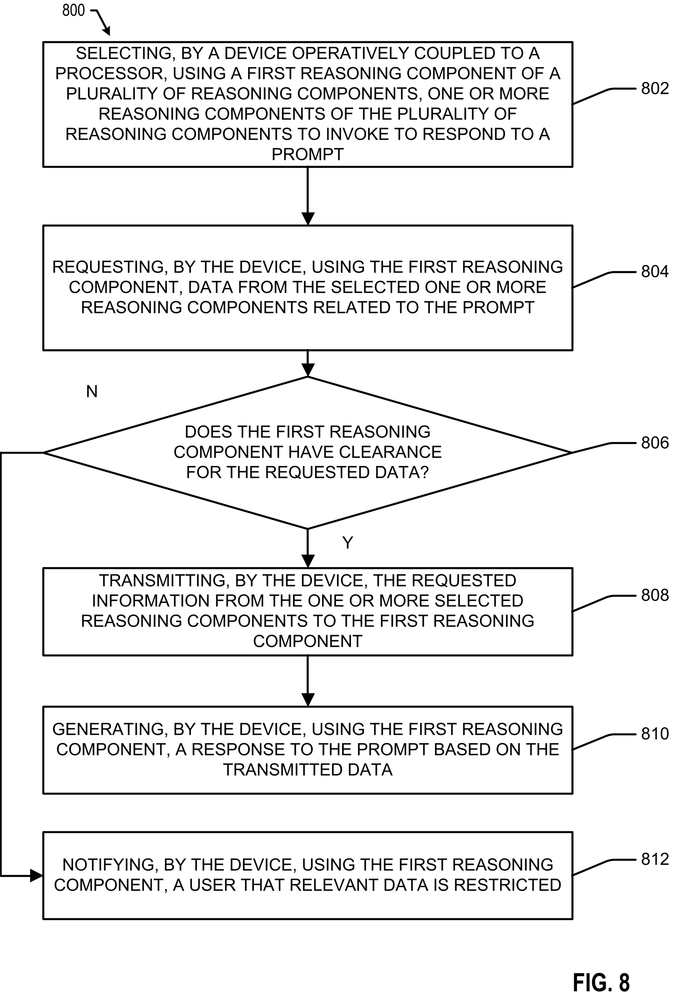

FIG. 8 illustrates a flow diagram of an example, non-limiting, method 800 that can facilitate reasoning and response generation across a plurality of reasoning components, in accordance with one or more embodiments described herein.

In various embodiments, act 802 can comprise selecting, by a device (e.g., system 302) operatively coupled to a processor (e.g., processor 310), using a first reasoning component (e.g., reasoning component 314) of a plurality of reasoning components (e.g., additional reasoning components 322) one or more other reasoning components of the plurality of reasoning components to invoke to respond to a prompt. For example, as described above in relation to FIGS. 3-8, reasoning component 314 can receive a prompt and divide the prompt into one or more sub-tasks. Reasoning component 314 can then compare the sub-tasks to the capabilities of the other reasoning components in the plurality of reasoning components. For example, given a sub-task calls for a specific piece or type or information, reasoning component 314 can select a second reasoning component of additional reasoning components 322 that manages a data source related to the specific piece or type of information. Reasoning component 314 can also select reasoning components based on the data processing ability of the reasoning component. For example, given that a sub-task calls for a particular data transformation of the specific piece of information, reasoning component 314 can select a third reasoning component of the additional reasoning components 322 that has the ability to execute the data transformation.

In various embodiments, act 804 can comprise requesting, by the device (e.g., system 302), using the first reasoning component (e.g., reasoning component 314), data from the selected one or more reasoning components related to the prompt. For example, reasoning component 314 can transmit requests to the selected one or more reasoning components. These requests, and all communications between various reasoning components, can be secured using a secure messaging platform and a multi-agent messaging protocol. These requests can comprise information such as access/control clearance level of the reasoning component making the request, access/control clearance level of the entity who input the prompt, the prompt itself, the data or information type requested, how the data or information should be processed or transformed, where the data or information should be transmitted to, and any other information relevant to answering the prompt.

In various embodiments, act 806 can comprise determining, by the device (e.g., system 302), if the first reasoning component (e.g., reasoning component 314) has clearance for the requested data. For example, as described above, reasoning component 314 can send a request to a second reasoning component of additional reasoning components 322. The second reasoning component can first check that the request is authentic using one or more security protocols or policies as described above in relation to FIGS. 3-7. The second reasoning component can then check both the access/control clearance level of reasoning component 314 and the access/control clearance level of the entity that input the prompt to reasoning component 314. If either of these access/control clearance levels are lower than that of the requested data (e.g., a "NO" determination), the second reasoning component can refuse to transmit the data and method 800 can comprise to act 812. If both of the access/control clearance levels meet the threshold of the requested data (e.g., a "YES" determination), method 800 can proceed to act 808.

In various embodiments, act 808 can comprise transmitting, by the device (e.g., system 302) the requested data from the one or more selected reasoning components to the first reasoning component (e.g., reasoning component 314). For example, as described above in relation to FIGS. 3-7, the selected reasoning components can each aggregate and/or process the requested data and then send the aggregated data to reasoning component 314 for use in response generation. It should be appreciated that in one or more embodiments described herein, a second reasoning component of the selected reasoning component can send its requested data to a third reasoning component of the selected reasoning components, wherein the third reasoning component executes data processing or transformations on the requested data and then the third reasoning component transmits the transformed or processed data to reasoning component 314.

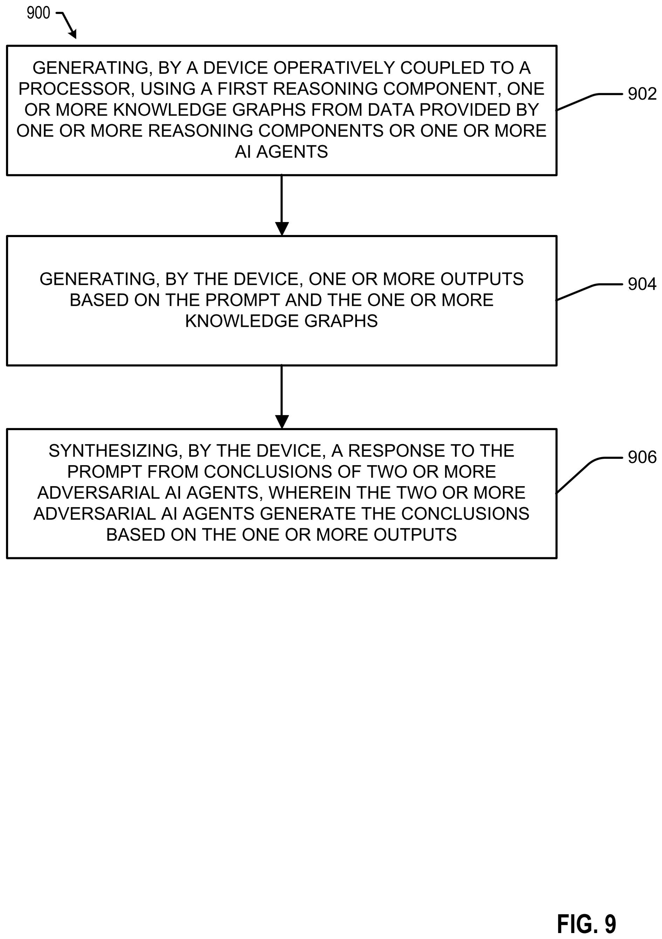

In various embodiments, act 810 can comprise generating, by the device (e.g., system 302), using the first reasoning component (e.g., reasoning component 314), a response to the prompt based on the transmitted data. For example, as described above in relation to FIGS, 3-7, and below in relation to FIG. 9, reasoning component 314 can utilize the transmitted data as a repository to generate a response to the prompt.

In various embodiments, act 812 can comprise notifying, by the device (e.g., system 302), using the first reasoning component (e.g., reasoning component 314), a user that relevant data is restricted. For example, in response to a "NO" determination at act 806, the reasoning component 812 can notify the user or entity that input the prompt that some information could not be retrieved and the response and thus the response may be of lower quality. In another example, in response to a "NO" determination at act 806, the response generation process may terminate for lack of information. In a further example, in response to a "NO" determination at act 806, the user is not notified of the restricted data for security purposes and response generation can proceed without the restricted data.

FIG. 9 illustrates a flow diagram of an example, non-limiting, method 900 that can facilitate response generation across a plurality of reasoning components, in accordance with one or more embodiments described herein.

In various embodiments, act 902 can comprise generating, by a device (e.g., system 302) operatively coupled to a processor (e.g., processor 310), using a first reasoning component (e.g., reasoning component 314) of a plurality of reasoning components, one or more knowledge graphs from data provided by one or more reasoning components or one or more AI agents. For example, as described above in relation to FIGS. 3-7, reasoning component 314 can divide a prompt into various sub-tasks and assign the sub-tasks to additional reasoning components 322 or AI agents 318. These sub-tasks can include tasks such as data retrieval, processing, and transformation. The results of these sub-tasks can be transmitted back to reasoning component 314, wherein reasoning component 314, using knowledge engine 404, can generate the structure of and then populate one or more knowledge graphs with the data provided by the additional reasoning components 322 and/or AI agents 318.

In various embodiments, act 904 can comprise generating, by the device (e.g., system 302) one or more outputs based on the prompt and the one or more knowledge graphs. For example, the one or more analytical modules 608 of knowledge engine 404 can generate one or more outputs based on the one or more knowledge graphs and the prompt.

In various embodiments, act 906 can comprise synthesizing, by the device (e.g., system 302) a response to the prompt from conclusions of two or more adversarial AI agents (e.g., adversarial sub-agents 514), wherein the two or more adversarial Al agents generated the conclusions based on the one or more outputs. For example, as described above in relation to FIGS. 3-7, adversarial sub-agents 514 can utilize the outputs of the analytical modules 608 to generate one or more conclusions. The adversarial sub-agents can then argue these conclusions amongst themselves and utilize voting procedures to select one or more conclusions as accurate. Reasoning component 314 can then utilize natural language processing and synthesization to transform the selected conclusions into a plain language response that is output to the entity that input the prompt.

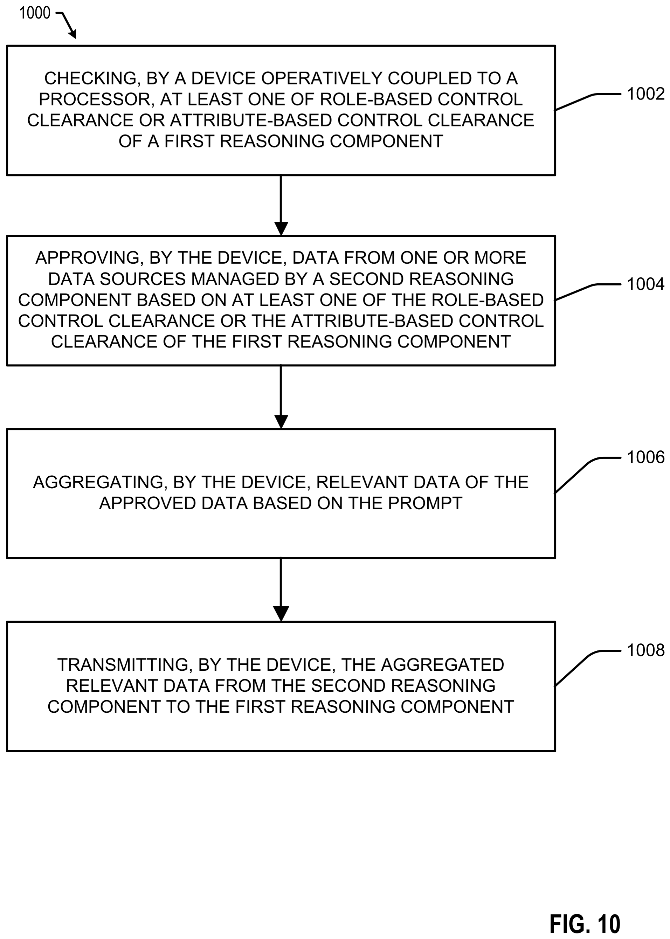

FIG. 10 illustrates a flow diagram of an example, non-limiting, method 1000 that can facilitate information transfer across a plurality of reasoning components, in accordance with one or more embodiments described herein.

In various embodiments, act 1002 can comprise checking, by a device (e.g., additional systems 320) operatively coupled to a processor, at least one of role-based control clearances or attribute-based control clearance of a first reasoning component. For example, in response to receiving a data request from reasoning component 314, a second reasoning component of additional reasoning components 322 can check the role-based control clearance and/or attribute-based control clearance of reasoning component 314 and/or that of an entity or user operating reasoning component 314. In various embodiments these role-based control clearances and/or attribute-based control clearances can be verified using one or more security policies and/or secure messaging protocols.

In various embodiments, act 1004 can comprise approving, by the device (e.g., additional systems 322) one or more data sources managed by a second reasoning component (e.g., additional reasoning components 322) based on at least one of the role-based control clearance and/or attribute-based control clearance of the first reasoning component (e.g., reasoning component 314). For example, the second reasoning component can manage one or more data sources, each of which have specified role-based control clearance and/or attribute-based control clearance levels required to access. Thus, based on the role-based control clearance and/or attribute-based control clearance of reasoning component 314, one or more of these data sources can be approved for access/use by reasoning component 314.

In various embodiments, act 1006 can comprise aggregating, by the device (e.g., additional systems 322), relevant data of the approved data based on the prompt. For example, the second reasoning component can sort the approved data for data that may be relevant to the prompt and aggregate the relevant data. In various embodiments, this aggregation may further comprise processing or transformation of the relevant data. In this manner, the second reasoning component acts as a filter for reasoning component 314, ensuring that only relevant data aggregated, thus reducing the overall data transmitted and processed by reasoning component 314.

In various embodiments, act 1008 can comprise transmitting, by the device (e.g., additional system 322), the aggregated relevant data from the second reasoning component to the first reasoning component (e.g., reasoning component 314). For example, once the relevant data has been aggregated the second reasoning component can transmit the aggregated data back to reasoning component 314 for use in prompt generation. In another example, the second reasoning component can transmit the aggregated data to a third reasoning component of additional reasoning components 322 for further aggregation, processing, or transformation and then the third reasoning component can transmit the aggregated data to reasoning component 314.

An advantage of the systems, and/or of corresponding methods described herein is the ability to integrate various data sources and reason across the data sources, without the use of central data servers. For example, as each reasoning component serves as both a data storage point, through its management of one or more data sources, and as a processing point, through the reasoning and knowledge engines, there is no need for centralized servers to route data or processing tasks through. This improves reliability as there is no single point of failure, as well as improves scalability as more reasoning components can be rapid and easily connected to the other reasoning components to manage new data sources or to enable a greater number of users to utilize the data web of reasoning components.

An additional advantage of the systems, and/or of corresponding methods described herein is the ability to deploy reasoning components on edge computing devices. Edge device may be those that have reduced memory or processing capabilities and thus lie at the "edge" of a network. As the various sub-components of the reasoning component can be easily swapped out or removed, basic versions of the reasoning component with limited computer resource requirements can be deployed on edge devices and utilize other more robust reasoning components for more advance actions or tasks.

An additional advantage of the systems, and/or of corresponding methods described herein is the ability to ensure data security and access compliance. For example, as the security AI agent monitors all actions and can veto any action that violates security policies, data protection policies, or data access policies, the security AI agents can ensure compliance with security policies across the whole of the synthetic data mesh.

In various instances, machine learning algorithms or models can be implemented in any suitable way to facilitate any suitable aspects described herein. To facilitate some of the above-described machine learning aspects of various embodiments, consider the following discussion of artificial intelligence (Al). Various embodiments described herein can employ artificial intelligence to facilitate automating one or more features or functionalities. The components can employ various AI-based schemes for carrying out various embodiments/examples disclosed herein. In order to provide for or aid in the numerous determinations (e.g., determine, ascertain, infer, calculate, predict, prognose, estimate, derive, forecast, detect, compute) described herein, components described herein can examine the entirety or a subset of the data to which it is granted access and can provide for reasoning about or determine states of the system or environment from a set of observations as captured via events or data. Determinations can be employed to identify a specific context or action, or can generate a probability distribution over states, for example. The determinations can be probabilistic; that is, the computation of a probability distribution over states of interest based on a consideration of data and events. Determinations can also refer to techniques employed for composing higher-level events from a set of events or data.

Such determinations can result in the construction of new events or actions from a set of observed events or stored event data, whether or not the events are correlated in close temporal proximity, and whether the events and data come from one or several event and data sources. Components disclosed herein can employ various classification (explicitly trained (e.g., via training data) as well as implicitly trained (e.g., via observing behavior, preferences, historical information, receiving extrinsic information, and so on)) schemes or systems (e.g., support vector machines, neural networks, expert systems, Bayesian belief networks, fuzzy logic, data fusion engines, and so on) in connection with performing automatic or determined action in connection with the claimed subject matter. Thus, classification schemes or systems can be used to automatically learn and perform a number of functions, actions, or determinations.

A classifier can map an input attribute vector, z = (z1, z2, z3, z4, zn), to a confidence that the input belongs to a class, as by f(z) = confidence(class). Such classification can employ a probabilistic or statistical-based analysis (e.g., factoring into the analysis utilities and costs) to determinate an action to be automatically performed. A support vector machine (SVM) can be an example of a classifier that can be employed. The SVM operates by finding a hyper-surface in the space of possible inputs, where the hyper-surface attempts to split the triggering criteria from the non-triggering events. Intuitively, this makes the classification correct for testing data that is near, but not identical to training data. Other directed and undirected model classification approaches include, e.g., naïve Bayes, Bayesian networks, decision trees, neural networks, fuzzy logic models, or probabilistic classification models providing different patterns of independence, any of which can be employed. Classification as used herein also is inclusive of statistical regression that is utilized to develop models of priority.

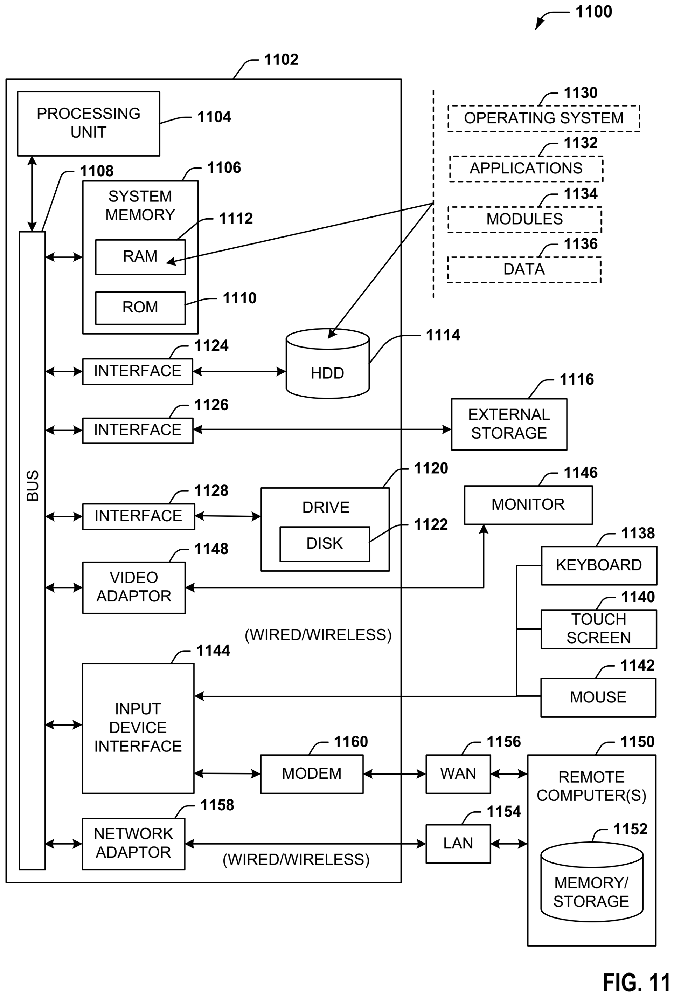

In order to provide additional context for various embodiments described herein, FIG. 11 and the following discussion are intended to provide a brief, general description of a suitable computing environment 1100 in which the various embodiments of the embodiment described herein can be implemented. While the embodiments have been described above in the general context of computer-executable instructions that can run on one or more computers, those skilled in the art will recognize that the embodiments can be also implemented in combination with other program modules or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multi-processor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 11, the example environment 1100 for implementing various embodiments of the aspects described herein includes a computer 1102, the computer 1102 including a processing unit 1104, a system memory 1106 and a system bus 1108. The system bus 1108 couples system components including, but not limited to, the system memory 1106 to the processing unit 1104. The processing unit 1104 can be any of various commercially available processors. Dual microprocessors and other multi processor architectures can also be employed as the processing unit 1104.

The system bus 1108 can be any of several types of bus structure that can further interconnect to a memory bus (with or without a memory controller), a peripheral bus, and a local bus using any of a variety of commercially available bus architectures. The system memory 1106 includes ROM 1110 and RAM 1112. A basic input/output system (BIOS) can be stored in a non-volatile memory such as ROM, erasable programmable read only memory (EPROM), EEPROM, which BIOS contains the basic routines that help to transfer information between elements within the computer 1102, such as during startup. The RAM 1112 can also include a high-speed RAM such as static RAM for caching data.

The computer 1102 further includes an internal hard disk drive (HDD) 1114 (e.g., EIDE, SATA), one or more external storage devices 1116 (e.g., a magnetic floppy disk drive (FDD) 1116, a memory stick or flash drive reader, a memory card reader, etc.) and a drive 1120, e.g., such as a solid state drive, an optical disk drive, which can read or write from a disk 1122, such as a CD-ROM disc, a DVD, a BD, etc. Alternatively, where a solid state drive is involved, disk 1122 would not be included, unless separate. While the internal HDD 1114 is illustrated as located within the computer 1102, the internal HDD 1114 can also be configured for external use in a suitable chassis (not shown). Additionally, while not shown in environment 1100, a solid state drive (SSD) could be used in addition to, or in place of, an HDD 1114. The HDD 1114, external storage device(s) 1116 and drive 1120 can be connected to the system bus 1108 by an HDD interface 1124, an external storage interface 1126 and a drive interface 1128, respectively. The interface 1124 for external drive implementations can include at least one or both of Universal Serial Bus (USB) and Institute of Electrical and Electronics Engineers (IEEE) 1194 interface technologies. Other external drive connection technologies are within contemplation of the embodiments described herein.

The drives and their associated computer-readable storage media provide nonvolatile storage of data, data structures, computer-executable instructions, and so forth. For the computer 1102, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1112, including an operating system 1130, one or more application programs 1132, other program modules 1134 and program data 1136. All or portions of the operating system, applications, modules, or data can also be cached in the RAM 1112. The systems and methods described herein can be implemented utilizing various commercially available operating systems or combinations of operating systems.

Computer 1102 can optionally comprise emulation technologies. For example, a hypervisor (not shown) or other intermediary can emulate a hardware environment for operating system 1130, and the emulated hardware can optionally be different from the hardware illustrated in FIG. 11. In such an embodiment, operating system 1130 can comprise one virtual machine (VM) of multiple VMs hosted at computer 1102. Furthermore, operating system 1130 can provide runtime environments, such as the Java runtime environment or the .NET framework, for applications 1132. Runtime environments are consistent execution environments that allow applications 1132 to run on any operating system that includes the runtime environment. Similarly, operating system 1130 can support containers, and applications 1132 can be in the form of containers, which are lightweight, standalone, executable packages of software that include, e.g., code, runtime, system tools, system libraries and settings for an application.

Further, computer 1102 can be enable with a security module, such as a trusted processing module (TPM). For instance with a TPM, boot components hash next in time boot components, and wait for a match of results to secured values, before loading a next boot component. This process can take place at any layer in the code execution stack of computer 1102, e.g., applied at the application execution level or at the operating system (OS) kernel level, thereby enabling security at any level of code execution.

A user can enter commands and information into the computer 1102 through one or more wired/wireless input devices, e.g., a keyboard 1138, a touch screen 1140, and a pointing device, such as a mouse 1142. Other input devices (not shown) can include a microphone, an infrared (IR) remote control, a radio frequency (RF) remote control, or other remote control, a joystick, a virtual reality controller or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1104 through an input device interface 1144 that can be coupled to the system bus 1108, but can be connected by other interfaces, such as a parallel port, an IEEE 1194 serial port, a game port, a USB port, an IR interface, a BLUETOOTH^{®} interface, etc.

A monitor 1146 or other type of display device can be also connected to the system bus 1108 via an interface, such as a video adapter 1148. In addition to the monitor 1146, a computer typically includes other peripheral output devices (not shown), such as speakers, printers, etc.

The computer 1102 can operate in a networked environment using logical connections via wired or wireless communications to one or more remote computers, such as a remote computer(s) 1150. The remote computer(s) 1150 can be a workstation, a server computer, a router, a personal computer, portable computer, microprocessor-based entertainment appliance, a peer device or other common network node, and typically includes many or all of the elements described relative to the computer 1102, although, for purposes of brevity, only a memory/storage device 1152 is illustrated. The logical connections depicted include wired/wireless connectivity to a local area network (LAN) 1154 or larger networks, e.g., a wide area network (WAN) 1156. Such LAN and WAN networking environments are commonplace in offices and companies, and facilitate enterprise-wide computer networks, such as intranets, all of which can connect to a global communications network, e.g., the Internet.

When used in a LAN networking environment, the computer 1102 can be connected to the local network 1154 through a wired or wireless communication network interface or adapter 1158. The adapter 1158 can facilitate wired or wireless communication to the LAN 1154, which can also include a wireless access point (AP) disposed thereon for communicating with the adapter 1158 in a wireless mode.

When used in a WAN networking environment, the computer 1102 can include a modem 1160 or can be connected to a communications server on the WAN 1156 via other means for establishing communications over the WAN 1156, such as by way of the Internet. The modem 1160, which can be internal or external and a wired or wireless device, can be connected to the system bus 1108 via the input device interface 1144. In a networked environment, program modules depicted relative to the computer 1102 or portions thereof, can be stored in the remote memory/storage device 1152. It will be appreciated that the network connections shown are example and other means of establishing a communications link between the computers can be used.

When used in either a LAN or WAN networking environment, the computer 1102 can access cloud storage systems or other network-based storage systems in addition to, or in place of, external storage devices 1116 as described above, such as but not limited to a network virtual machine providing one or more aspects of storage or processing of information. Generally, a connection between the computer 1102 and a cloud storage system can be established over a LAN 1154 or WAN 1156 e.g., by the adapter 1158 or modem 1160, respectively. Upon connecting the computer 1102 to an associated cloud storage system, the external storage interface 1126 can, with the aid of the adapter 1158 or modem 1160, manage storage provided by the cloud storage system as it would other types of external storage. For instance, the external storage interface 1126 can be configured to provide access to cloud storage sources as if those sources were physically connected to the computer 1102.

The computer 1102 can be operable to communicate with any wireless devices or entities operatively disposed in wireless communication, e.g., a printer, scanner, desktop or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

Various non-limiting aspects are described in the following examples.

EXAMPLE 1: A system for response generation across a network of distributed computing nodes, comprising: a memory that stores computer executable components; and a processor that executes the computer executable components stored in the memory, wherein the computer executable components comprise: a plurality of reasoning components, wherein a first reasoning component of the plurality of reasoning components is operatively coupled to other reasoning components of the plurality of reasoning components, and the first reasoning component is configured to select one or more of the other reasoning components to invoke to respond to a prompt.

EXAMPLE 2: The system of any preceding example, wherein the first reasoning component is further configured to select one or more artificial intelligence agents of a plurality of artificial intelligence agents to invoke to respond to the prompt.
EXAMPLE 3: The system of any preceding example, wherein the first reasoning component is configured to select the one or more other reasoning components of the plurality of reasoning components to invoke to respond to the prompt by calculating a relevance metric, to the prompt, of lists of capabilities of the plurality of reasoning components.

EXAMPLE 4: The system of any preceding example, wherein one or more reasoning components of the plurality of reasoning components are configured to select one or more additional reasoning components of the plurality of reasoning components based on one or more additional prompts.

EXAMPLE 5: The system of any preceding example, wherein the first reasoning component is further configured to generate a response to the prompt based on data provided by the selected one or more artificial intelligence agents and the selected one or more other reasoning components.

EXAMPLE 6: The system of any preceding example, wherein the first reasoning component is configured to generate the response to the prompt by: generating one or more data structures from the data provided by the selected one or more artificial intelligence agents and the selected one or more other reasoning components; generating one or more outputs based on the prompt and the one or more data structures; and synthesizing the response from conclusions of two or more adversarial artificial intelligence agents, wherein the two or more adversarial artificial intelligence agents generate the conclusions based on the one or more outputs.

EXAMPLE 7: The system of any preceding example, wherein the first reasoning component is further configured to generate the response to the prompt by dimensionally reducing the one or more data structures using a singular value decomposition.

EXAMPLE 8: The system of any preceding example, wherein a second reasoning component of the selected one or more other reasoning components is configured to, in response to being selected: check at least one of role-based control clearance or attribute-based access control clearance of the first reasoning component; approve data from one or more data sources managed by the second reasoning component based on the at least one of the role-based control clearance or attribute-based access control clearance of the first reasoning component; aggregate relevant data of the approved data based on the prompt; and transmit the aggregated relevant data to the first reasoning component.

In various aspects, any combination or combinations of EXAMPLES 1-8 can be implemented.

EXAMPLE 9: A computer-implemented method for response generation across a network of distributed computing nodes comprising: selecting, by a device operatively coupled to a processor, one or more reasoning components of a plurality of operatively coupled reasoning components based on a prompt; selecting, by the device, one or more artificial intelligence agents of a plurality of artificial intelligence agents based on the prompt; and generating, by the device, a response to the prompt based on data generated by the selected one or more reasoning components and data generated by the selected one or more artificial intelligence agents.

EXAMPLE 10: The computer-implemented method of any preceding example, wherein the one or more selected reasoning components further select one or more additional reasoning components of the plurality of operatively coupled reasoning components.

EXAMPLE 11: The computer-implemented method of any preceding example, wherein the selecting the one or more artificial intelligence agents of the plurality of artificial intelligence agents comprises calculating, by the device, a relevance metric, to the prompt, of lists of capabilities of the plurality of artificial intelligence agents.

EXAMPLE 12: The computer-implemented method of any preceding example, wherein the selecting the one or more reasoning components comprises calculating, by the device, a relevance metric, to the prompt, of lists of data sources managed by the plurality of reasoning components.

EXAMPLE 13: The computer-implemented method of any preceding example, wherein generating the response to the prompt comprises: generating, by the device, using the selected one or more reasoning components, data from one or more data sources managed by the selected one or more reasoning components; populating, by the device, one or more knowledge graphs with the data generated by the selected one or more artificial intelligence agents and the data generated by the selected one or more reasoning components; generating, by the device, using one or more analytical modules of the selected one or more reasoning components, one or more data transformations based on the prompt and the one or more knowledge graphs; and synthesizing, by the device, using natural language processing, the response from arguments of a plurality of adversarial artificial intelligence agents, wherein the plurality of adversarial artificial intelligence agents generate the arguments based on the one or more data transformations.

In various aspects, any combination or combinations of EXAMPLES 9-13 can be implemented.

EXAMPLE 14: A computer program product for response generation across a network of distributed computing nodes comprising a non-transitory computer-readable memory having program instructions embodied therewith, the program instructions executable by a processor to cause the processor to: generate, by the processor, using a first reasoning component of a plurality of operatively coupled reasoning components, one or more sub-tasks based on a received prompt; select, by the processor, using the first reasoning component, one or more additional reasoning components of the plurality of reasoning components to execute the one or more sub-tasks; execute, by the processor, using the one or more additional reasoning components, the one or more sub-tasks; transmit, by the processor, using the one or more additional reasoning components, results of the one or more sub-tasks to the first reasoning component; and generate, by the processor, using the first reasoning component, a response to the received prompt based on the results of the one or more sub-tasks.

EXAMPLE 15: The computer program product of any preceding example, wherein the transmitting the results of the one or more sub-tasks comprises a publish/subscriber communication protocol between the first reasoning component and the selected one or more additional reasoning components.

EXAMPLE 16: The computer program product of any preceding example, erein the program instructions are further executable to cause the processor to, in response to a reasoning component of the one or more additional reasoning components being selected to execute a sub-task of the one or more sub-tasks: determine, by the processor, using the reasoning component, if the sub-task complies with security policies of the reasoning component; and in response to determining the sub-task complies with the one or more security policies of the reasoning component, execute, by the processor, using the reasoning component, the sub-task.

EXAMPLE 17: The computer program product of any preceding example, wherein the program instructions are further executable to cause the processor to: determine, by the processor, using the first reasoning component, if the one or more sub-tasks comply with security policies of the first reasoning component; and in response to determining the one or more sub-tasks comply with the security policies, select, by the processor, using the first reasoning component, the one or more additional reasoning components of the plurality of reasoning components to execute the one or more sub-tasks.

EXAMPLE 18: The computer program product of any preceding example, wherein the program instructions are further executable to cause the processor to: receive, by the processor, using the first reasoning component, the received prompt; determine, by the processor, using the first reasoning component, if the received prompt complies with security policies of the first reasoning component; and in response to determining the received prompt complies with the security policies of the first reasoning component, generate, by the processor, using the first reasoning component, the one or more sub-tasks based on the received prompt.

EXAMPLE 19: The computer program product of any preceding example, wherein the processing instructions are further executable by the processor to cause the processor to: determine, by the processor, using the first reasoning component, if the response to the prompt complies with security policies of the first reasoning component; and in response to determining the response to the prompt complies with the security policies of the first reasoning component, display, by the processor, the response to the received prompt on a graphical user interface.

EXAMPLE 20: The computer program product of any preceding example, wherein the selecting of the one or more additional reasoning components to execute the sub-tasks causes the processor to: determine, by the processor, using the first reasoning component, a database comprising data relevant to a sub-task of the one or more sub-tasks; identify, by the processor, using the first reasoning component, a reasoning component of the plurality of reasoning components that manages the database; and transmitting, by the processor, using the first reasoning component, the sub-task to the identified reasoning component.

In various aspects, any combination or combinations of EXAMPLES 14-20 can be implemented.

EXAMPLE 21: A system, comprising: a computing device that accesses a prompt provided by a user; and a reasoning program hosted by the computing device that: determines, based on a plurality of user-provided data sources, which of a plurality of user-provided artificial intelligence agents, or which of a plurality of other reasoning programs hosted on other computing devices, to invoke so as to substantively respond to or satisfy the prompt; generates a response to the prompt, by invoking the determined user-provided artificial intelligence agents or the determined other reasoning programs; and renders the response to the user.

EXAMPLE 22: The system of any preceding example, wherein the prompt, the plurality of user-provided data sources, and the plurality of user-provided artificial intelligence agents are associated with: a medical operational context; a scientific operational context; an industrial or manufacturing operational context; or a financial operational context.

EXAMPLE 23: A method, comprising: any combination of any aspects, features, elements, or details conveyed in the Appendix of the incorporated provisional application.

In various aspects, any combination or combinations of EXAMPLES 1-23 can be implemented.

## Claims

1. A system for response generation across a network of distributed computing nodes, comprising:
a memory that stores computer executable components; and
a processor that executes the computer executable components stored in the memory, wherein the computer executable components comprise:
a plurality of reasoning components, wherein a first reasoning component of the plurality of reasoning components is operatively coupled to other reasoning components of the plurality of reasoning components, and the first reasoning component is configured to select one or more of the other reasoning components to invoke to respond to a prompt.

2. The system of claim 1, wherein the first reasoning component is further configured to select one or more artificial intelligence agents of a plurality of artificial intelligence agents to invoke to respond to the prompt.

3. The system of claim 2, wherein the first reasoning component is configured to select the one or more other reasoning components of the plurality of reasoning components to invoke to respond to the prompt by calculating a relevance metric, to the prompt, of lists of capabilities of the plurality of reasoning components.

4. The system of claim 1, wherein one or more reasoning components of the plurality of reasoning components are configured to select one or more additional reasoning components of the plurality of reasoning components based on one or more additional prompts.

5. The system of claim 3, wherein the first reasoning component is further configured to generate a response to the prompt based on data provided by the selected one or more artificial intelligence agents and the selected one or more other reasoning components.

6. The system of claim 5, wherein the first reasoning component is configured to generate the response to the prompt by:
generating one or more data structures from the data provided by the selected one or more artificial intelligence agents and the selected one or more other reasoning components;
generating one or more outputs based on the prompt and the one or more data structures; and
synthesizing the response from conclusions of two or more adversarial artificial intelligence agents, wherein the two or more adversarial artificial intelligence agents generate the conclusions based on the one or more outputs.

7. The system of claim 6, wherein the first reasoning component is further configured to generate the response to the prompt by dimensionally reducing the one or more data structures using a singular value decomposition.

8. The system of claim 5, wherein a second reasoning component of the selected one or more other reasoning components is configured to, in response to being selected:
check at least one of role-based control clearance or attribute-based access control clearance of the first reasoning component;
approve data from one or more data sources managed by the second reasoning component based on the at least one of the role-based control clearance or attribute-based access control clearance of the first reasoning component;
aggregate relevant data of the approved data based on the prompt; and
transmit the aggregated relevant data to the first reasoning component.

9. A computer-implemented method for response generation across a network of distributed computing nodes comprising:
selecting, by a device operatively coupled to a processor, one or more reasoning components of a plurality of operatively coupled reasoning components based on a prompt;
selecting, by the device, one or more artificial intelligence agents of a plurality of artificial intelligence agents based on the prompt; and
generating, by the device, a response to the prompt based on data generated by the selected one or more reasoning components and data generated by the selected one or more artificial intelligence agents.

10. The computer-implemented method of claim 9, wherein the one or more selected reasoning components further select one or more additional reasoning components of the plurality of operatively coupled reasoning components.

11. The computer-implemented method of claim 9, wherein the selecting the one or more artificial intelligence agents of the plurality of artificial intelligence agents comprises calculating, by the device, a relevance metric, to the prompt, of lists of capabilities of the plurality of artificial intelligence agents.

12. The computer-implemented method of claim 9, wherein the selecting the one or more reasoning components comprises calculating, by the device, a relevance metric, to the prompt, of lists of data sources managed by the plurality of reasoning components.

13. The computer-implemented method of claim 10, wherein generating the response to the prompt comprises:
generating, by the device, using the selected one or more reasoning components, data from one or more data sources managed by the selected one or more reasoning components;
populating, by the device, one or more knowledge graphs with the data generated by the selected one or more artificial intelligence agents and the data generated by the selected one or more reasoning components;
generating, by the device, using one or more analytical modules of the selected one or more reasoning components, one or more data transformations based on the prompt and the one or more knowledge graphs; and
synthesizing, by the device, using natural language processing, the response from arguments of a plurality of adversarial artificial intelligence agents, wherein the plurality of adversarial artificial intelligence agents generate the arguments based on the one or more data transformations.

14. A computer program product for response generation across a network of distributed computing nodes comprising a non-transitory computer-readable memory having program instructions embodied therewith, the program instructions executable by a processor to cause the processor to:
generate, by the processor, using a first reasoning component of a plurality of operatively coupled reasoning components, one or more sub-tasks based on a received prompt;
select, by the processor, using the first reasoning component, one or more additional reasoning components of the plurality of reasoning components to execute the one or more sub-tasks;
execute, by the processor, using the one or more additional reasoning components, the one or more sub-tasks;
transmit, by the processor, using the one or more additional reasoning components, results of the one or more sub-tasks to the first reasoning component; and
generate, by the processor, using the first reasoning component, a response to the received prompt based on the results of the one or more sub-tasks.

15. The computer program product of claim 14, wherein the transmitting the results of the one or more sub-tasks comprises a publish/subscriber communication protocol between the first reasoning component and the selected one or more additional reasoning components.

16. The computer program product of claim 14, wherein the program instructions are further executable to cause the processor to, in response to a reasoning component of the one or more additional reasoning components being selected to execute a sub-task of the one or more sub-tasks:
determine, by the processor, using the reasoning component, if the sub-task complies with security policies of the reasoning component; and
in response to determining the sub-task complies with the one or more security policies of the reasoning component, execute, by the processor, using the reasoning component, the sub-task.

17. The computer program product of claim 14, wherein the program instructions are further executable to cause the processor to:
determine, by the processor, using the first reasoning component, if the one or more sub-tasks comply with security policies of the first reasoning component; and
in response to determining the one or more sub-tasks comply with the security policies, select, by the processor, using the first reasoning component, the one or more additional reasoning components of the plurality of reasoning components to execute the one or more sub-tasks.

18. The computer program product of claim 14, wherein the program instructions are further executable to cause the processor to:
receive, by the processor, using the first reasoning component, the received prompt;
determine, by the processor, using the first reasoning component, if the received prompt complies with security policies of the first reasoning component; and
in response to determining the received prompt complies with the security policies of the first reasoning component, generate, by the processor, using the first reasoning component, the one or more sub-tasks based on the received prompt.

19. The computer program product of claim 14, wherein the processing instructions are further executable by the processor to cause the processor to:
determine, by the processor, using the first reasoning component, if the response to the prompt complies with security policies of the first reasoning component; and
in response to determining the response to the prompt complies with the security policies of the first reasoning component, display, by the processor, the response to the received prompt on a graphical user interface.

20. The computer program product of claim 14, wherein the selecting of the one or more additional reasoning components to execute the sub-tasks causes the processor to:
determine, by the processor, using the first reasoning component, a database comprising data relevant to a sub-task of the one or more sub-tasks;
identify, by the processor, using the first reasoning component, a reasoning component of the plurality of reasoning components that manages the database; and
transmitting, by the processor, using the first reasoning component, the sub-task to the identified reasoning component.
